# EUROPÄISCHE PATENTSCHRIFT

(11) **EP 1 890 560 B1**
(45) Veröffentlichungstag und Bekanntmachung des Hinweises auf die Patenterteilung: **21.01.2009**
(21) Anmeldenummer: 06849376.6
(22) Anmeldetag: 14.06.2006
(51) Int. Cl.: A23L 3/00, A23L 3/04

(54) **TUNNELPASTEUR**
TUNNEL PASTEURISER
PASTEURISATEUR À TUNNEL

(30) Priorität: 17.06.2005 DE 102005028195
(43) Veröffentlichungstag der Anmeldung: 27.02.2008
(73) Patentinhaber: Krones Nordic ApS, 2840 Holte (DK)
(72) Erfinder: NIELSEN, Jørgen, Tage, DK-3140 Algarde (DK); DALUM, Kim, Christian, DK-2960 Rungssted Kyst (DK)
(74) Vertreter: Grünecker, Kinkeldey, Stockmair & Schwanhäusser Anwaltssozietät
(86) Internationale Anmeldenummer: PCT/EP2006/005740
(87) Internationale Veröffentlichungsnummer: WO 2007/101455

(56) Entgegenhaltungen:
- EP-A- 0 960 574
- US-A- 4 331 629
- US-A- 4 441 406
- US-A- 4 693 902
- US-A- 5 772 958
- US-A1- 2002 031 587

## Beschreibung

Die Erfindung betrifft einen Tunnelpasteur gemäß dem Oberbegriff des Anspruchs 1.

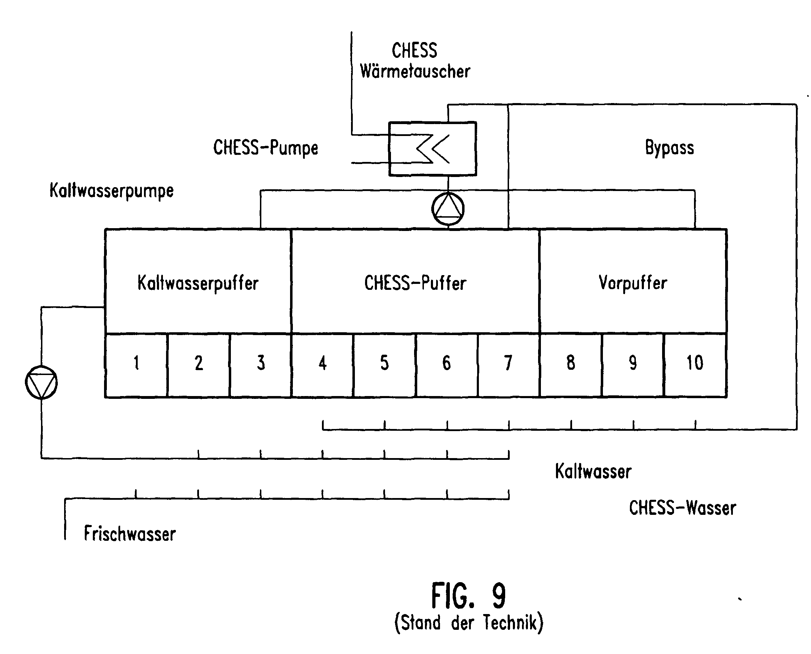

Solche Tunnelpasteure für gefüllte Lebensmittelbehältnisse, insbesondere gefüllte Flaschen oder Dosen, sind aus dem Stand der Technik bereits bekannt, wie auch in Fig. 9 gezeigt. Fig. 9 zeigt einen Kanalpasteur mit einem integrierten Heizungssystem (US-Patent Nr. 5772, 958, EP 95909657.9) in der Tunnelkonstruktion. Der Tunnelpasteur weist im Wesentlichen zwei Komponenten auf, nämlich den in Fig. 9 gezeigten Kanal, sowie einen darüber angeordneten nicht gezeigten Tunnel, der Spritzeinrichtungen bzw. Berieselungseinrichtungen aufweist, die das zu pasteurisierende Gut, das sich durch den Tunnel bewegt aufheizt und pasteurisiert. Ein derartiger Pasteur weist beispielsweise drei Aufwärmzonen (Zone 1-3), hier vier Haltezonen (Zone 4-7) sowie drei Abkühlzonen (8-10) auf. Aus dem Kanal wird aus den Zonenkammem das entsprechend temperierte Wasser nach oben in das entsprechende Tunnelmodul der jeweiligen Temperaturzone gepumpt, so dass das zu pasteurisierende Gut dann mit Wasser der entsprechenden Temperatur berieselt wird. Durch den Wärmetauscher aufgeheiztes Wasser wird in den Chess-Puffer geleitet. Wasser, das von oben in die sehr klein bemessenen Zonenkammem 1-10 fließt, tritt bei zu hohem Füllstand in die entsprechenden Puffer, d.h. von Zonenkammem 1-3 in den Kaltwasserpuffer, von Zonenkammem 4-7 in den Chess-Puffer und von den Zonenkammem 8-10 in den Vorpuffer .

Von dort aus kann es wieder zur Regulierung der Temperatur in den einzelnen Zonenkammern verwendet werden.

Das bekannte System weist jedoch den Nachteil auf, dass die Temperatur in den einzelnen Zonenkammem nicht sehr genau reguliert werden kann und oft die Zugabe von frischem Kaltwasser für eine ausreichende Regulierung notwendig ist, was jedoch unwirtschaftlich ist. Darüber hinaus muss von dem Wärmetauscher ein sehr großes Volumen auf hoher Temperatur gehalten werden. Insbesondere wenn Produktionslücken auftreten, beispielsweise wenn ein Füller stoppt, kann die Temperatur in den einzelnen Zonen nicht in effektiver Weise geregelt werden. Auch kann ein derartiges System eine Änderung der Kühlwassertemperatur nur schlecht berücksichtigen. Oft kommt es zu einer zeitlichen Verzögerung der Temperaturregelung.

Es ist auch bereits ein System bekannt, bei dem Wasser kaskadenartig durch entsprechende Überläufe beispielsweise von Zone 1 nach 2, von 2 nach 3 etc. geleitet wird. Auch hier ist keine exakte Regelung der Wassertemperatur in den einzelnen Zonen möglich.

Hiervon ausgehend liegt der vorliegenden Erfindung die Aufgabe zugrunde, einen Tunnelpasteur, sowie ein entsprechendes Pasteurisierverfahren bereitzustellen, der eine verbesserte Regelung der Wassertemperatur in den einzelnen Zonen ermöglicht, wobei der Wasser- und Energieverbrauch gesenkt werden kann.

Erfindungsgemäß wird die Aufgabe durch die kennzeichnenden Merkmale der Ansprüche 1 und 12 gelöst.

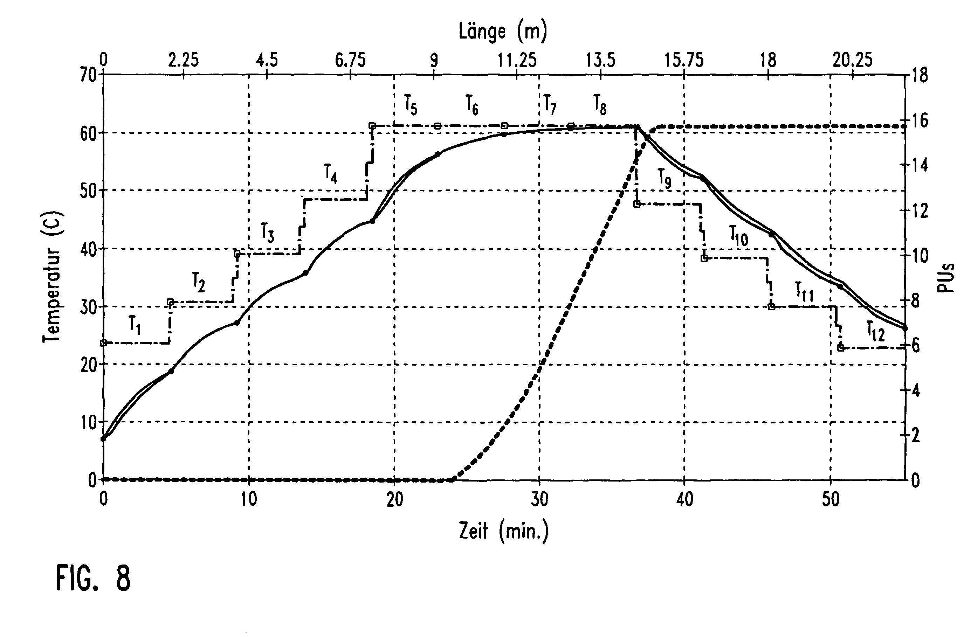

Gemäß der Erfindung haben einzelne Temperaturzonen eigene einzelne Zonenpuffer, die von Zonenpuffem anderer Temperaturzonen getrennt sind. Für die Aufwärmphase, Haltephase und Abkühlphase sind jeweils mehrere einzelne Temperaturzonen (s. auch Figur 8) vorgesehen, in denen das Wasser mit einer bestimmten Temperatur zirkuliert, d.h., das zu pasteurisierende Gut bespritzt bzw. berieselt, von der entsprechenden Auffangzone aufgefangen wird und von dort aus wieder nach oben in den Tunnel in dieser Temperaturzonen gepumpt wird. Die Zonenpuffer sind so in der jeweiligen Temperaturzone integriert, dass sie nur Wasser aus der bestimmten Temperaturzone puffern, ohne Vermischen von Wasser aus anderen Temperaturzonen. Das Wasser in den Zonenpuffern hat somit eine im Wesentlichen der Temperatur der zugehörigen Temperaturzone entsprechende Temperatur.

Dadurch, dass gemäß der vorliegenden Erfindung Wasser wahlweise aus einzelnen voneinander getrennten Zonenpuffem entnehmbar ist und wahlweise gezielt einer oder mehreren Temperaturzonen zuführbar ist, kann Wasser aus einer bestimmten Temperaturzone gezielt für die Temperaturregulierung von Wasser einer weiteren Temperaturzone verwendet werden. Somit kann im Gegensatz zum Stand der Technik das Wasser aus den einzelnen Zonenpuffem gezielt verwendet werden, ohne dass es mit Wasser aus anderen Zonen vermischt wird. Ist beispielsweise in einem Zonenpuffer ausreichend heißes Wasser vorhanden, so kann es gezielt zu einer anderen Temperaturzone, z.B. in deren Auffangzone oder Zonenpuffer etc., geleitet werden, deren Temperatur zu niedrig ist. Auch Kühlwasser aus einem entsprechenden Zonenpuffer einer Temperaturzone kann entweder in die nächste oder in irgendeine andere Temperaturzone geleitet werden, die gekühlt werden muss. Somit können Wasser und auch Energiekosten gespart werden. Auch eine Änderung der Kühlwassertemperatur oder Produktionsunregelmäßigkeiten können einfach überwunden werden. Eine Verzögerung der Temperaturregelung gibt es nicht mehr.

Die vorliegende Erfindung ist nicht darauf beschränkt, dass alle Temperaturzonen einen Zonenpuffer aufweisen, der in erfindungsgemäßer Weise zur Temperaturregelung eingesetzt wird. Es ist auch möglich, dass nur einige Temperaturzonen in erfindungsgemäßer Weise getrennte Zonenpuffer aufweisen, von denen aus Wasser zur Temperaturregelung einer oder mehreren bestimmten Temperaturzonen zugeführt wird.

Es ist auch möglich, dass nicht allen Temperaturzonen Wasser aus entsprechenden Zonenpuffem zugeführt werden kann.

Als überschüssiges Wasser in den einzelnen Temperaturzonen wird hier das Wasser verstanden, das zusätzlich zu dem Wasser, das zum Zirkulieren in der entsprechenden Temperaturzone nötig ist, vorhanden ist und gepuffert werden muss. Derartiges Pufferwasser bzw. überschüssiges Wasser entsteht beispielsweise dadurch, dass zur Regulierung der Wassertemperatur den einzelnen Temperaturzonen zusätzlich Wasser zugeführt wird, das dann im Überschuss vorhanden ist. Gemäß der vorliegenden Erfindung kann jedoch genau dieses Pufferwasser, das eine genau definierte Temperatur aufweist, wieder zur Regulierung der Temperatur in anderen Temperaturzonen verwendet werden. Pufferwasser entsteht auch beim Stillstand der Anlage, d.h., wenn das Wasser nicht mehr zirkuliert.

Es ist möglich, dass die Volumina aller oder einzelner Auffangzonen so groß sind, dass die Auffangzonen selbst als getrennte Zonenpuffer für das überschüssige Wasser in den entsprechenden Temperaturzonen dienen.

Da dann die Auffangzonen als Puffer für das Wasser in den entsprechenden Temperaturzonen ausgebildet sind, sind weitere Puffertanks zum Aufbewahren von Pufferwasser aus den entsprechenden Temperaturzonen nicht mehr notwendig. Somit hat jede Temperaturzone ihren eigenen Puffer. Somit findet die Pufferung des Wassers der entsprechenden Temperaturzone sowie die Bereitstellung von Wasser entsprechend einer bestimmten Zonentemperatur in einer Auffangzone, d.h. in einem entsprechenden Behälter statt. Diese Anordnung vereinfacht den Tunnelpasteur erheblich.

Es ist auch möglich, dass die Temperaturzonen einen mit der entsprechenden Auffangzone verbundenen Pufferbehälter aufweisen, der dann zusammen mit der Auffangzone als jeweiliger Zonenpuffer dient.

Gemäß einem bevorzugten Ausführungsbeispiel wird das Wasser aus der entsprechenden Auffangzone über eine Zonenpumpe nach oben in die entsprechende Tunnelzone gepumpt. Auch das Wasser zur Temperaturregelung kann gleichzeitig über diese Zonenpumpe aus der entsprechenden Auffangzone gepumpt werden. Indem man die Zonenpumpe zum Abpumpen des Wassers zur Temperaturregulierung benutzt, kann die Vorrichtung erheblich vereinfacht werden, da keine zusätzliche Verrohrung, die von der Auffangzone wegführt, benötigt wird. Das Weiterleiten des von der Zonenpumpe aus abgepumpten Wassers kann dann über entsprechende Steuerventile gesteuert werden.

Vorzugsweise ist jedem Zonenpuffer ein Füllstandsmesser und ein Temperatursensor zugeordnet. Somit kann in jedem Zonenpuffer die Ist-Temperatur mit der Soll-Temperatur verglichen werden und darüber hinaus der Füllstand, z.B. ein minimaler und maximaler Füllstand ermittelt werden, worauf die Steuereinrichtung ermittelt, in welchem Zonenpuffer ausreichend Wasser einer bestimmten Temperatur vorhanden ist, um damit die Temperatur in den Temperaturzonen zu regulieren, ein Überlaufen zu verhindern oder auch einen zu geringen Füllstand (unterhalb eines minimalen Füllstands) zu verhindern, damit beispielsweise die Zonenpumpe nicht trocken läuft.

Gemäß einem bevorzugten Ausführungsbeispiel weist der Tunnelpasteur mindestens eine Kaltwasserversorgungsleitung und mindestens eine Warmwasserversorgungsleitung auf, wobei die einzelnen Auffangzonen bzw. Zonenpuffer eine Kaltwasserzuführung und eine Warmwasserzuführung aufweisen, wobei zur Temperaturregelung aus den Zonenpuffem Wasser über entsprechende Leitungen entweder der Kaltwasserversorgungsleitung oder der Warmwasserversorgungsleitung zugeführt wird. Wenn der Tunnelpasteur einen Wärmetauscher umfasst, kann das der Warmwasserversorgungsleitung zugeführte Wasser auch zuerst über eine Rückführleitung über den Wärmetauscher geleitet werden bevor es in die Warmwasserversorgungsleitung geleitet wird.

Die zuvor beschriebene Anordnung erlaubt eine Verrohrung mit minimalem Aufwand und minimalen Kosten, da sich der Aufbau für die Temperaturregelung im Wesentlichen der für die Zirkulation des Wassers benötigten Rohrleitungen bedient. Die erfindungsgemäße Lösung ist somit platzsparend und kostengünstig zu realisieren, da lediglich Leitungen zu entsprechenden Warmwasser, Kaltwasser bzw. Rückführleitung zum Wärmetauscher mit entsprechenden Ventilen sowie ggf. Puffertanks für jede Temperaturzone (wenn nicht die Auffangzone als Zonenpuffer dient) bereitgestellt werden müssen.

Gemäß einer bevorzugten Ausführungsform ist unterhalb einer Auffangzone ein Absaugkasten angeordnet, über den die Zonenpumpe Wasser aus der Auffangzone pumpt, wobei der Absaugkasten auf einer ersten Seite des Tunnelpasteurs angeordnet ist und ein Verteilerrohr auf der gegenüberliegenden Seite angeordnet ist und über ein Rohr mit der Zonenpumpe verbunden ist, wobei von dem Verteilerrohr mindestens ein Verbindungsrohr nach oben in den entsprechenden Tunnel abzweigt und das Verteilerrohr weiter über eine Leitung mit der Warmwasserversorgungsleitung bzw. einer Rückführleitung zum Wärmetauscher und/oder über eine Leitung mit der Kaltwasserversorgungsleitung verbunden ist. Diese Ausführungsform bringt den Vorteil mit sich, dass die Rohrleitungen platzsparend unter dem Tunnelpasteur angeordnet werden können, wobei auf einer Seite die Zonenpumpe und auf der anderen Seite das Verteilerrohr angeordnet ist. Das Wasser in der Auffangzone kann auf einfache Weise in den Absaugkasten laufen, wobei dann auf der anderen Seite des Pasteurs ausreichend Platz für das Verteilerrohr mit den abzweigenden Leitungen vorhanden ist. Der Absaugkasten stellt ein weiteres Flüssigkeitsvolumen bereit und kann somit auch als Teil des Zonenpuffers gewertet werden, so dass in dem Absaugkasten beispielsweise Zuführleitungen münden können oder Füllstandsensoren etc. angeordnet sein können.

In vorteilhafter Weise weisen die Zonenpuffer einen Ablass auf, über den bei zu hohem Füllstand wenn nötig Wasser abgelassen werden kann, damit die Auffangzonen nicht überlaufen. Wasser kann jedoch auch wenn benötigt in die Kaltwasserversorgungsleitung oder Warmwasserversorgungsleitung oder in die Rückführleitung zum Wärmetauscher abgeführt werden.
Der Auffangbereich kann durch mehrere durch Trennelemente unterteilte Wannen gebildet sein. Es können auch mehrere nebeneinanderliegende Wannen über eine unterhalb der Wanne angeordnete Sammeleinrichtung miteinander verbunden werden und somit eine Auffangzone darstellen. Somit kann ein Auffangbereich vorgefertigt werden, wobei die Zonenbreite dann an die entsprechenden Begebenheiten angepasst werden kann.

Der Tunnelpasteuer weist mehrere Aufheizzonen, mehrere Haltezonen und mehrere Abkühlzonen auf, wobei Auffangzonen im Aufheiz- und Abkühlbereich, die die gleiche Soll-Temperatur haben, über entsprechende Leitungen miteinander verbunden sind. Somit kann in effektiver Weise das Wasser, das sich am Ende des Tunnelpasteurs durch Abkühlen des erwärmten Guts erwärmt zum Aufwärmen des Guts in den Aufheizzonen verwendet werden.

Die vorliegende Erfindung wird nachfolgend unter Bezugnahme der folgenden Figuren näher erläutert:
- Fig. 1: zeigt in perspektivischer Darstellung einen Tunnelpasteur gemäß einer Ausführungsform der vorliegenden Erfindung.
- Fig. 2: zeigt einen Ausschnitt aus dem Rohrleitungssystem des erfindungsgemäßen Tunnelpasteurs auf der der in Fig. 1 gezeigten gegenüberliegenden Seite.
- Fig. 3: zeigt in schematischer Darstellung einen Querschnitt durch den erfindungsgemäßen Tunnelpasteur.
- Fig. 4: zeigt in schematischer Darstellung das Rohrleitungssystem des Tunnelpasteurs.
- Fig. 5A: zeigt eine Draufsicht auf einer Zone des erfindungsgemäßen Tunnelpasteurs.
- Fig. 5B: zeigt einen Schnitt entlang der Linie AA der Fig. 5A.
- Fig. 5C: zeigt die in Fig. 5A gezeigte Auffangszone in perspektivischer Darstellung.
- Fig. 6: zeigt ein Flussdiagramm für den Fall, dass Zonen 5 und 10 aufgeheizt werden.
- Fig. 7: zeigt ein Flussdiagramm für den Fall, dass Temperaturzonen T1 bis T4 gekühlt werden sollen.
- Fig. 8: zeigt ein Diagramm, das die Aufwärmtemperatur in Abhängigkeit der Zeit darstellt.
- Fig. 9: zeigt den Kanal eines Tunnelpasteurs nach dem Stand der Technik.

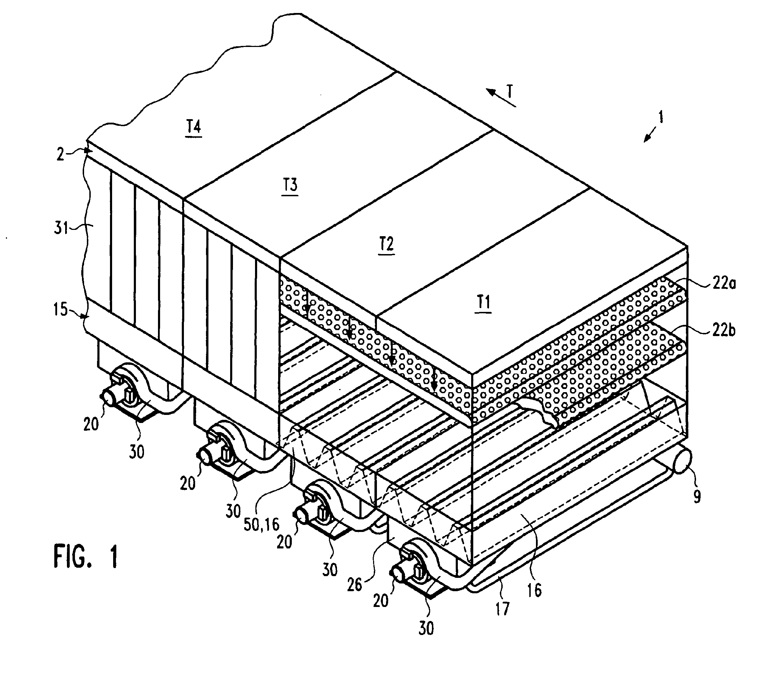

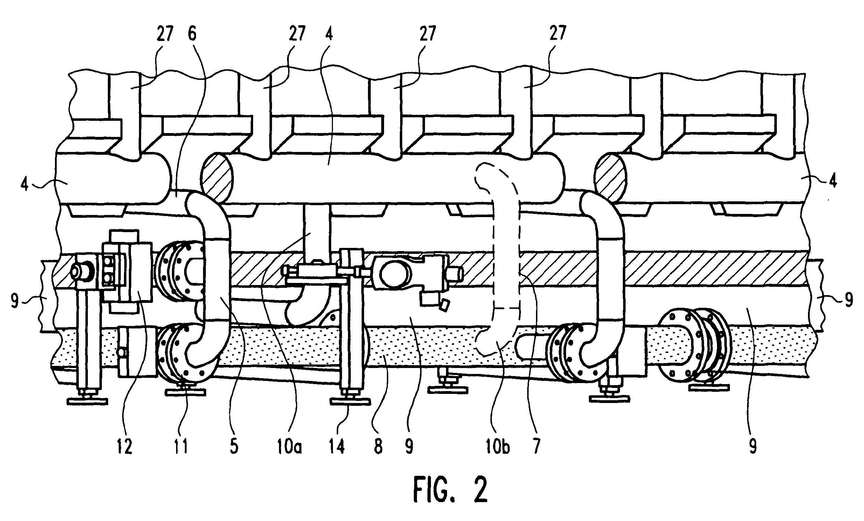

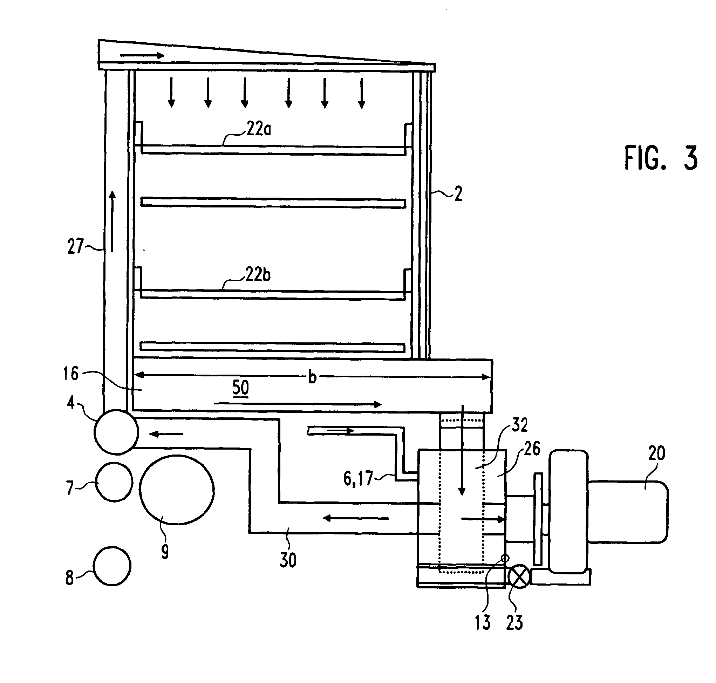

Figuren 1 bis 4 zeigen schematisch den Aufbau eines Tunnelpasteurs 1 insbesondere für gefüllte Flaschen gemäß der vorliegenden Erfindung. In Figur 1 sind jedoch aus Platzgründen nur 4 der z.B. 12 Temperaturzonen dargestellt. Wie aus Fig. 1 und 2 hervorgeht, weist der Tunnelpasteur 1 einen Tunnel 2 auf, durch den das zu pasteurisierende Gut geleitet und mit Wasser bespritzt bzw. besprenkelt wird. Das zu pasteurisierende Gut wird dabei auf übereinanderliegenden Transportbändern 22A, 22B in Transportrichtung T durch den Tunnel 2 gefördert. Die Transportmittel sind hier umlaufende gelochte Transportbänder 22a,b. An der Oberseite des Tunnels 2 wird über entsprechende Einrichtungen in Pfeilrichtung das Wasser nach unten auf das zu pasteurisierende Gut geleitet. Unten am Tunnel 2 befindet sich der Auffangbereich 15 mit Auffangzonen 16 , in dem das herablaufende Wasser aufgefangen wird und schließlich wie nachfolgende beschrieben, zirkulierend über eine entsprechende Leitung 27 (siehe Fig. 3) im Tunnel 2 nach oben geleitet wird um wieder verwendet zu werden. Die Seitenwände des Tunnels sind beispielsweise durch Glasscheibentüren (31) etc. abgedeckt, wie in der linken Hälfte der Fig. 1 ersichtlich ist.

Der Tunnelpasteur weist mehrere Temperaturzonen T₁, T₂, T₃, T_{4....} auf. Wie aus Fig. 8 ersichtlich ist, wird das zu pasteurisierende Gut in vier Zonen zunächst von einer Temperatur von unter 10° C bis etwa 60° aufgeheizt, wobei dann die Temperatur in vier weiteren Zonen auf etwa 60° gehalten wird, wonach das zu pasteurisierende Gut schließlich in vier weiteren Zonen auf etwa 20 bis 30° abgekühlt wird. Die untere durchgehende Kurve zeigt dabei die Temperatur des zu pasteurisierenden Guts in Abhängigkeit der Zeit, wobei die obere gepunktet gestrichelte Kurve die Temperatur des Wassers in den einzelnen voneinander getrennten Temperaturzonen T₁-T₁₂ zeigt. Die gestrichelte Linie zeigt den Pasteurisierungsgrad. Die Temperatur in den unterschiedlichen Zonen muss daher, wie nachfolgend erläutert, geregelt werden. Es können zwei bis sechs Aufwärmzonen, zwei bis sechs Haltezonen sowie zwei bis sechs Abkühlzonen vorgesehen sein.

Der Tunnelpasteur kann modular aufgebaut sein, d.h., dass wie aus Fig. 1 hervorgeht, mehrere Tunnelmodule die den Temperaturzonen entsprechen aneinander gefügt werden können. Unten an den jeweiligen Tunnelmodulen 2 können dann entsprechende Auffangzonen 16 mit jeweiliger Zonenpumpe 20 und entsprechender Verrohrung modular zugeordnet werden.

Eine jede Temperaturzone bzw. ein jedes Modul weist wie zuvor gesagt, eine Auffangzone 16 auf. Gemäß der vorliegenden Erfindung kann gemäß einer Ausführungsform die Breite b (siehe Fig. 3) der Auffangzone mindestens so breit wie die Breite des Tunnels 2 sein. Die Auffangzone 16 fängt das im Tunnel herablaufende Wasser auf und dient hier als Zonenpuffer 50 für das Wasser in der entsprechenden Temperaturzone. Das bedeutet, dass das Wasser in der entsprechenden Temperaturzonen, das über die Wassermenge hinausgeht, die zirkuliert in dem entsprechenden Zonenpuffer 50 abgepuffert wird. Dieses Pufferwasser bzw. überschüssige Wasser wurde beispielsweise zur Temperaturregulierung zusätzlich in die entsprechende Temperaturzone geleitet. Dies bedeutet, dass eine jede Temperaturzone einen eigenen getrennten Zonenpuffer aufweist. In diesem Ausführungsbeispiel findet die Pufferung des in der Zone verwendeten Wassers sowie die Bereitstellung von Wasser entsprechend der bestimmten Zonentemperatur in einer von den anderen Auffangzonen getrennten Auffangzone, d.h. in einem Behälter bzw. einer Kammer statt, ohne dass zusätzliche Puffer etc. notwendig sind.

Es ist aber auch möglich, dass die einzelnen Temperaturzonen einen mit der entsprechenden Auffangzone 16 verbundenen Pufferbehälter aufweisen, wobei dann die Auffangzone und der entsprechende Pufferbehälter den Zonenpuffer darstellen. Wie auch immer der Zonenpuffer aufgebaut ist, wesentlich dabei ist, dass die einzelnen Zonenpuffer der einzelnen Temperaturzonen getrennt voneinander ausgebildet sind.

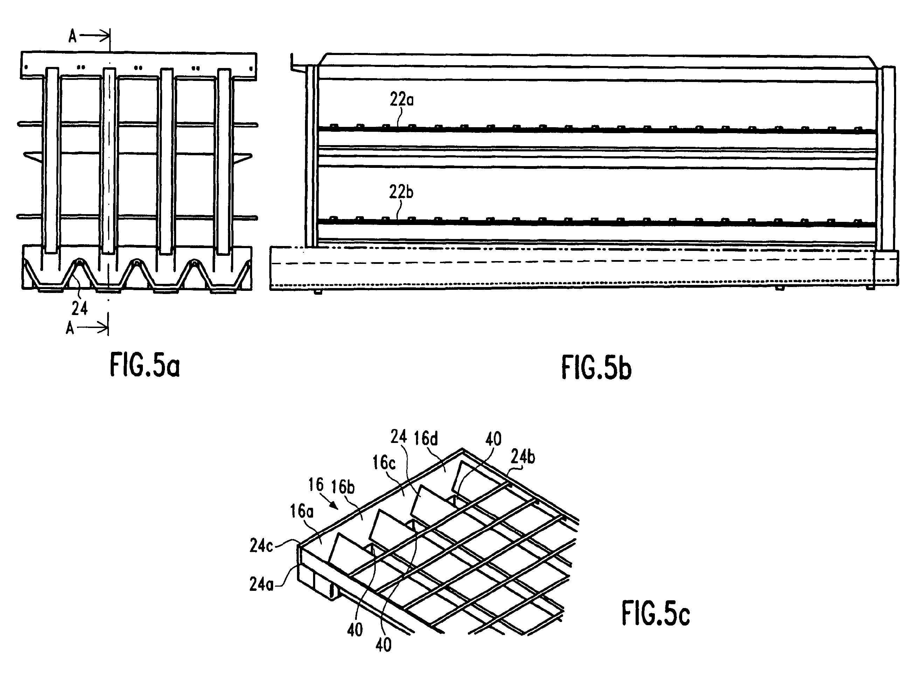

Fig. 5A zeigt eine Aufsicht auf eine Auffangzone 16 und Fig. 5C zeigt eine perspektivische Darstellung dieser Auffangzone 16.

Hier weist die Auffangzone 16 mehrerer Wannenbereiche 16a, b, c, d auf, die durch im Wesentlichen dreieckförmige Trennelemente 24 voneinander getrennt sind. Die Wannenbereiche 16a, b, c, d weisen, wenn sie als Modul ausgebildet werden, um ihren Umfang seitliche Trennwände 24a, b, c, d (die der Trennwand 24c gegenüberliegende Trennwand 24d ist in Fig. 5C nicht dargestellt), deren Höhe etwas höher ist als die der dreieckförmigen Trennelemente 24. Damit die Wannenbereiche 16a, b, c, d eine Auffangzone darstellen können, ist unterhalb der Auffangzone 16 eine Sammeleinrichtung (z.B. Pumpkasten 26) vorgesehen, über die die einzelnen Wannenbereiche 16a, b, c, d miteinander verbunden werden, beispielsweise durch entsprechende Öffnungen 40 im Bodenbereich der einzelnen Wannenbereiche 16a, b, c, d, so dass Wasser aus allen Bereichen in der Auffangzone 16 ablaufen kann. In Fig. 5B zeigt die gepunktete Linie den minimalen Füllstand des Wassers in dem Zonenpuffer, d.h., hier der Auffangzone während des Betriebs, die gestrichelte Linie den maximalen Stand während des Betriebs, und die zweifach gepunktete gestrichelte Linie den maximalen Füllstand nach Stopp. Der Boden der Auffangzone 16 ist leicht zu der Seite des Pasteurs 1 geneigt, an der die Zonenpumpe 20 angeordnet ist, bzw. an der wie aus Fig. 3 hervorgeht, die Sammeleinrichtung hier der Absaugkasten, angeordnet ist. Somit ist sichergestellt, dass eine vollständige Entleerung der Auffangzone 16 nach dem Betrieb möglich ist.

Wie aus Fig. 5B und Fig. 3 hervorgeht, ist bei diesem Ausführungsbeispiel die Breite b der Auffangzone 16 größer als die Breite des Tunnels 2, so dass die Auffangzone 16 über den Tunnel 2 vorsteht.

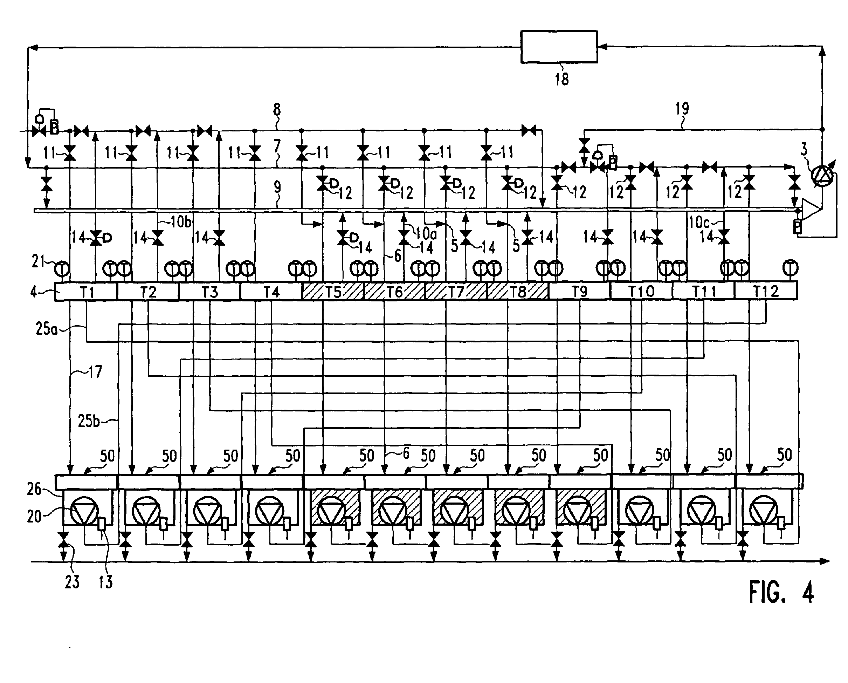

An einer Seite des Tunnelpasteurs 1, der in Fig. 1 gezeigten Vorderseite bzw. der in Fig. 3 gezeigten rechten Seite ist für jede Temperaturzone ein Absaugkasten 26 vorgesehen, in den das Wasser aus der Auffangzone 16 fließen kann. An diesem Absaugkasten 26 ist eine Zonenpumpe 20 angeordnet, die das Wasser über eine Leitung 30 in ein Verteilerrohr 4 pumpt, das auf der gegenüberliegenden Seite des Tunnelpasteurs, d.h. auf der Rückseite des in Fig. 1 gezeigten Pasteurs bzw. auf der linken Seite in Fig. 3 liegt. In dem Absaugkasten 26 kann ein Filter 32 vorgesehen sein, der das umlaufende Wasser von Verunreinigungen des zu pasteurisierenden Guts reinigt. Ebenfalls kann im Absaugkasten 26 ein Füllstandsensor, beispielsweise ein Drucksensor 13 angeordnet sein, über den der Füllstand in dem entsprechenden Zonenpuffer bzw. in der Auffangzone bestimmt wird. Wie beschrieben, wird von der Zonenpumpe aus das Wasser über die Leitung 30 unter dem Pasteur 1 hindurch auf die andere Seite in ein Verteilerrohr 4 gepumpt. Auf der der Zonenpumpe 20 gegenüberliegenden Seite befindet sich auch die Warmwasserversorgungsleitung 7 sowie die Kaltwasserversorgungsleitung 8, die in Transportrichtung T verlaufen, ebenso auf dieser Seite befindet sich die Rückführleitung 9 zum Wärmetauscher 18 (siehe hierzu auch Fig. 2 und 4). Von dem Verteilerrohr 4 zweigt mindestens eine, hier drei Rohre 27, nach oben in den Tunnel 2 der entsprechenden Temperaturzone ab, um Wasser zur Berieselung des zu pasteurisierenden Guts nach oben zu leiten. Wie aus Fig. 2 und 4 hervorgeht, weist in Fig. 2 das Verteilerrohr 4 eine Leitung 10a zur Rückführleitung 9, die zum Wärmetauscher 18 führt auf. Somit kann Warmwasser aus dem Verteilerrohr 4 zurück in die Rückführleitung 9 zum Wärmetauscher 18 oder wie aus Fig. 4 hervorgeht, über diese Rückführleitung 9 und die Rückführleitung 19 wieder in die Warmwasserleitung 7 zurückgeführt werden, um dann gegebenenfalls anderen Temperaturzonen zur Temperaturregulierung zugeführt zu werden. Der in Fig. 2 gezeigte Aufbau entspricht dem Aufbau in der Temperaturzone T6 in Fig. 4, d.h. in einer Haltezone, in der Warmwasser vorhanden ist (Zonen T5 bis T8). In den Aufwärmzonen T1 bis T4, in denen im Wesentlichen kaltes Wasser vorhanden ist, führt von dem Verteilerrohr 4 eine Leitung 10b in die Kaltwasserleitung 8, da in diesen Zonen hauptsächlich kaltes Wasser vorhanden ist, das über die Kaltwasserleitung 8 zur Temperaturregulierung anderer Zonen zugeführt werden kann. Siehe hierzu die gestrichelte Leitung 10d in Fig. 2. Auch wenn bei diesem Ausführungsbeispiel nicht dargestellt, könnte auch in den Temperaturzonen T1 bis T4, d.h. in den Aufwärmzonen eine Verbindungsleitung 10a von dem Verteilerrohr 4 zur Rückführleitung zum Wärmetauscher oder eine Leitung zur Warmwasserversorgungsleitung 8 vorgesehen sein. In den Abkühlzonen 9 bis 12 sind von dem Verteilerrohr 4 Verbindungsleitungen 10c zur Warmwasserleitung 7 vorgesehen (in Fig. 2 nicht dargestellt). Wesentlich dabei ist, dass in den Aufwärmzonen (T1 bis T4) Wasser in die Kaltwasserleitung 8 zur Temperaturregulierung geleitet werden kann, von den Haltezonen (T5 bis T8) Wasser in die Rückführleitung zum Wärmetauscher 18 geleitet werden kann und von den Abkühlzonen T9 bis T12 Wasser aus den Auffangzonen in die Warmwasserversorgungsleitung 8 oder die Rückführleitung 9 geführt werden kann. Über die Rückführleitung 9 kann, wie aus Fig. 4 hervorgeht, das Wasser über die Wärmetauscherpumpe 3 wieder dem Wärmetauscher 18 zugeführt werden, die das Wasser auf beispielsweise eine Temperatur von 75° bis 85° aufwärmt und schließlich wieder der Warmwasserversorgungsleitung 7 zuführt. Über die Leitung 19 kann Wasser aus der Rückführleitung 9 auch in einer Schleife wieder der Warmwasserversorgungsleitung 7 zugeführt werden.

In den Leitungen 10a, b, c, die hier jeweils von dem Verteilerrohr 4 abzweigen, sind jeweils Puffersteuerventile 14 vorgesehen. Diese können von einer Steuerung (nicht dargestellt) aus angesteuert und geöffnet werden, wenn Wasser aus der entsprechenden Auffangzonen (16) bzw. dem dazugehörigen Verteilerrohr 4 zur Temperaturregelung in der gleichen oder in einer anderen Auffangzone 16 benötigt wird.

Wie weiter aus Fig. 4 hervorgeht, weist eine jede Temperaturzone eine Kaltwasserzuführung 17 und/oder Warmwasserzuführung 6 von den entsprechenden Versorgungsleitungen auf, die hier in den Absaugkasten 26 münden. Die Zufuhr wird über die Steuereinrichtung, über entsprechende Kaltwasserventile 11 bzw. Warmwasserventile 12 gesteuert. Es kann auch ein Abzweig 5 von der Kaltwasserversorgung in die Warmwasserzuführung vorgesehen sein. Bei dieser Ausführungsform weisen die Aufwärmzonen nur Kaltwasserzuführungen 17 auf, die wie aus Fig. 1 hervorgeht, in den Absaugkasten 26 münden. Dies liegt daran, dass Aufheiz- und Abkühlzonen mit gleicher Solltemperatur über entsprechende Leitungen 25A, B miteinander verbunden sind und das Wasser darin in Austausch steht. Wie aus Fig. 4 hervorgeht ist beispielsweise das Verteilerrohr 4 in der Temperaturzone T1 mit dem Absaugkasten 26 der letzten Abkühlstufe T12 verbunden, so dass das Wasser in ständigem Austausch steht, so dass die Wärme des sich abkühlenden Guts in der Abkühlphase (T9-T12) zum Aufheizen bzw. Aufwärmen in der Aufwärmphase (T1 bis T4) verwendet werden kann. In ähnlicher Weise sind die Zonen T2 mit T11, T3 mit T10 sowie die T4 mit T9 verbunden. Wie aus der Fig. 4 hervorgeht, ist im Verteilerrohr 4 jeweils ein Temperatursensor 21 vorgesehen, der die Temperatur des Wassers in der entsprechenden Temperaturzone misst. Die Temperatursensoren könnte jedoch auch in dem Zonenpuffer 50, 16, der Auffangzone 16 bzw. dem Absaugkasten 26 oder an einer anderen beliebigen Stelle im Wasserkreislauf angeordnet sein.

Im unteren Bereich des jeweiligen Absaugkastens 26 ist ein Ablauf 23 vorgesehen, der, wenn der maximale Füllstand über den Füllstandsensor 13 in dem Zonenpuffer, d.h. der Auffangzone 16 ermittelt wird, ein Abflussventil öffnet und so Wasser ableitet, damit es zu keiner Überschwemmung in den entsprechenden Auffangzonen kommt.

Bei dem erfindungsgemäßen Verfahren werden in der Steuereinrichtung Soll-Temperaturen für die einzelnen Temperaturbereiche der Aufwärmzone, der Haltezone und der Abkühlzone festgelegt. Über Temperatursensoren 21 wird die Temperatur des Wassers in den entsprechenden Temperaturzonen, d.h. hier z.B. in dem Verteilerrohr 4 erfasst. Weiter wird über entsprechende Füllstandsensoren 13 der Füllstand in den einzelnen Zonenpuffern, hier den Auffangzonen 16, gemessen. Insbesondere wird hier bestimmt, ob der Füllstand einen minimalen Füllstand (der nötig ist, dass das Wasser in der entsprechenden Zone zirkulieren kann) überschreitet, d.h. ob Pufferwasser in der entsprechenden Auffangzone vorhanden ist oder nicht. Darüber hinaus kann dann wenn über den Füllstandsensor 13 in einer Auffangzone 16 detektiert wird, dass der Füllstand einen maximalen Füllstand erreicht, das Ablassventil 23 geöffnet werden (oder bei Bedarf von den Pufferentnahmeleitungen 10 a,b,c entnommen werden), so dass es zu keiner Überschwemmung kommt.

Die über die Sensoren 21 gemessenen Temperaturen des Wassers in den entsprechenden Temperaturzonen werden mit dem Sollwert verglichen. Kommt es in einer Temperaturzone zu einer Abweichung der Ist-Temperatur von der Soll-Temperatur, so ermittelt die Steuereinrichtung über die Signale der Temperatursensoren 21, ob es eine Temperaturzone bzw. eine Auffangzone 16 gibt, deren Wasser eine geeignete Temperatur hat, die zur Temperaturregelung geeignet ist, wobei gleichzeitig beurteilt wird, ob ausreichend Wasser oberhalb des minimalen Füllstands in der entsprechenden Auffangszone 16 ist, d.h., dass ausreichend Pufferwasser in der entsprechenden Auffangzone ist, was wie zuvor beschrieben, über die entsprechenden Füllstandsensoren 13 beurteilt wird. Wird wie zuvor beschrieben, eine geeignete Auffangzone 16 ermittelt, die eine geeignete Temperatur und einen ausreichenden Füllstand aufweist, so wird von der Steuerung das dieser Auffangzone zugehörige Puffersteuerventil 14 geöffnet, so dass das Wasser aus der entsprechenden Auffangzone 16 über die Zonenpumpe 20 bei geöffnetem Ventil 14 entweder der Kaltwasserleitung 8, der Warmwasserleitung 7 oder der Rückführleitung 9 zugeführt werden kann, um dann von diesen Leitungen aus über die entsprechenden Kaltwasserzuführleitungen 17 oder Warmwasserzuführleitungen 6 einer anderen Temperaturzone zugeführt zu werden. Hierzu werden dann die entsprechenden Warm- oder Kaltwasserventile 11 oder 12 geöffnet. Bei diesem Ausführungsbeispiel wird die Kaltwasserzuführung 17 bzw. die Warmwasserzuführung 6 dem jeweiligen Absaugkasten 26 zugeführt. Das Warm- bzw. Kaltwasser kann jedoch auch an einer anderen Stelle im Wasserkreislauf der entsprechenden Temperaturzone zugefügt werden. Es wird selbstverständlich nur jeweils soviel Wasser über die Pufferentnahmeleitungen 10 a, b entnommen, dass der minimale Füllstand nicht unterschritten wird.

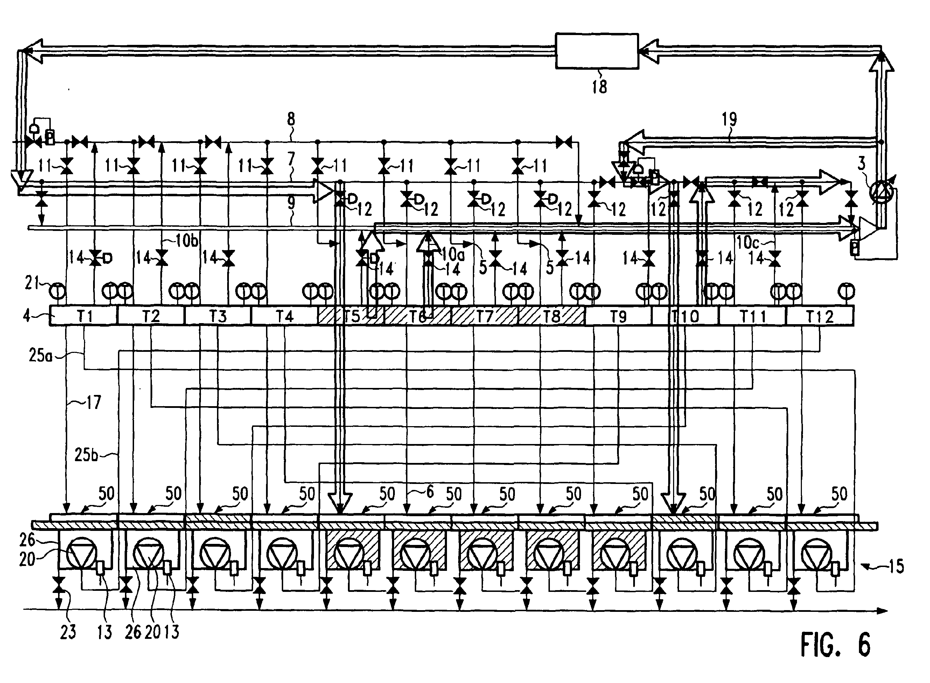

Fig. 6 zeigt ein Beispiel für die Temperaturregelung in den Temperaturzonen T5 und T10. Die Steuereinrichtung stellt fest, dass die Temperatur in der Temperaturzone T5 zu niedrig ist. Über den Füllstandsensor 13 wurde festgestellt, dass in den Temperaturzonen T5 und T6 ausreichend Pufferwasser, d.h. Pufferwasser über einen minimalen Füllstand vorhanden ist. Die Temperatur in den Temperaturzonen T5 und T6 des Wassers ist hier am höchsten. Daher öffnet die Steuerung die entsprechenden Regelventile 14 in den Temperaturzonen T5 und T6 und leitet Wasser aus den entsprechenden Auffangzonen 16, über die Zonenpumpen 20, die geöffneten Ventile 14 in die Rückführleitung 9, die hier das Wasser über die Wärmetauscherpumpe 3 in den Wärmetauscher 18 pumpt, der das Wasser auf eine entsprechende Temperatur aufheizt, wonach das Warmwasserventil 12 in der Zone T5 geöffnet wird und heißes Wasser der Temperaturzone T5, hier in den Ansaugkasten 26 geleitet wird. Es wird soviel warmes Wasser zugeführt, bis die Ist-Temperatur, die von dem Temperatursensor 21 gemessen wird in dem Temperaturbereich T5 der Soll-Temperatur entspricht.

Gleichzeitig stellt die Steuerung fest, dass auch in der Temperaturzone T10 die Temperatur zu niedrig liegt. Hier wird, da der Füllstandmesser 13 in der Temperaturzone T10 einen hohen Pegel feststellt (auch die Temperaturzone T₃, die über Leitungen 25a, b mit der Temperaturzone T₁₀ verbunden ist, weist daher einen hohen Pegel auf), das Puffersteuerventil 14 geöffnet und Wasser aus der Auffangzone 16 über die entsprechende Zonenpumpe 20 und über das geöffnete Ventil 14 der Warmwasserleitung 7 zugeführt, wobei ein Teil über die Wärmetauscherpumpe 3 dem Wärmetauscher 18 zugeführt wird und ein Teil über die Rückführleitung 19 der Warmwasserversorgungsleitung 7 rückgeführt wird, wobei über die Warmwasserversorgungsleitung 7 der Temperaturzone T10 solange warmes Wasser zugefügt wird, bis die Soll-Temperatur erreicht ist.

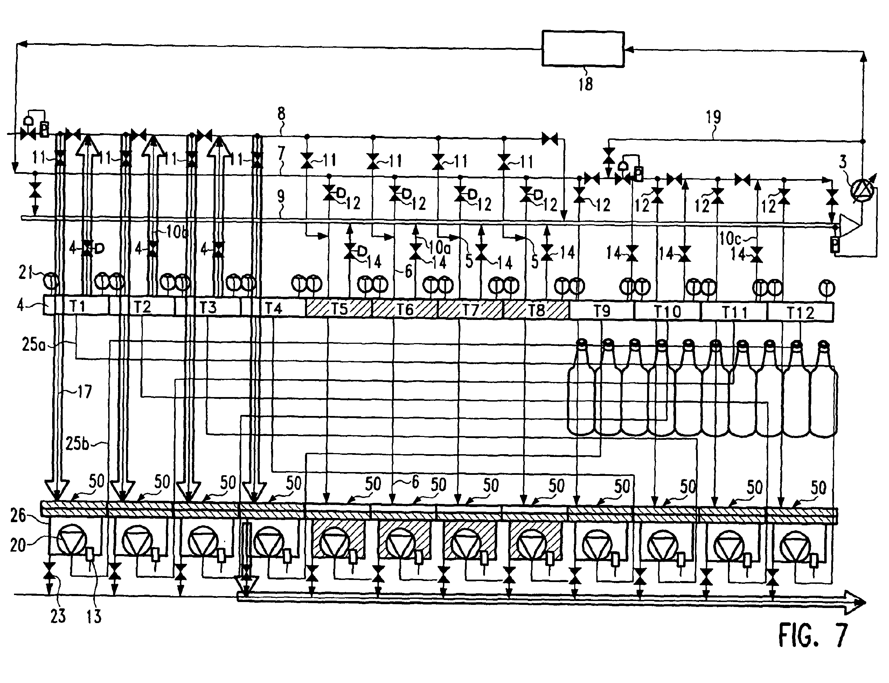

Fig. 7 zeigt ein weiteres Beispiel für das erfindungsgemäße Verfahren. Wenn beispielsweise eine Produktionslücke auftritt, so dass keine zu pasteurisierenden Gegenstände wie beispielsweise Flaschen in die Aufwärmzone T1 bis T4 einlaufen, findet hier auch keine Erwärmung mehr statt. Um jedoch ein Gleichgewicht zwischen den Aufwärmzonen und den Abkühlzonen aufrechtzuerhalten, müssen hier die Aufwärmzonen abgekühlt werden, indem Kaltwasser über die Leitung 17 der Temperaturzone T1 zugefügt wird, um die entsprechende Soll-Temperatur zu erreichen. Da zusätzlich Frischwasser zugefügt wird, erhöht sich der Pegel in der Auffangzone 16 in Zone T1, was über den Füllstandmesser 13 in dieser Temperaturzone gemessen werden kann. Auch die Temperaturzone T2, in der sich beispielsweise keine Flaschen mehr befinden, muss zur Aufrechterhaltung des Gleichgewichtszustandes zwischen den Temperaturzonen 2 und 11, d.h. zwischen den Temperaturzonen in der Aufwärm- und Abkühlphase mit gleicher Soll-Temperatur, zusätzlich gekühlt werden. Da sich in der Auffangzone 16 in der Zone T1 ausreichend kaltes Wasser befindet, wird hier das Ventil 14 in der Temperaturzone 1 geöffnet, so dass Wasser aus der Auffangzone 16 im Temperaturbereich T1 über die entsprechende Zonenpumpe 20 durch das Verteilerrohr 4 durch das geöffnete Ventil 14 der Kaltwasserleitung 8 zugeführt werden kann und von dort über die entsprechende Versorgungsleitung 17 in der Temperaturzone T2 bei geöffnetem Kaltwasserventil 11 zugeführt werden kann. In gleicher Weise wird aus den Auffangzonen 16 in den Temperaturzonen T2, T3 Wasser in die Kaltwasserleitung 8 geleitet, um jeweils den nachfolgenden Temperaturzonen zugeleitet werden zu können. Eine Zuleitung von den einzelnen Temperaturzonen in andere Temperaturzonen erfolgt solange, bis die entsprechende Soll-Temperatur in den entsprechenden Temperaturzonen erreicht ist.

Dadurch, dass die Auffangzonen 16, die unterhalb der entsprechenden Tunnelzonen angeordnet sind als Zonenpuffer dienen und die Verrohrung der Auffangzonen 16 wie in den Figuren 1-4 gezeigt ist derart gestaltet ist, dass zur Temperaturregelung Wasser aus den einzelnen getrennten Auffangzonen 16 wahlweise gezielt entnehmbar und wahlweise gezielt anderen Temperaturzonen zuführbar ist, kann die benötigte Wassermenge und Energiemenge wesentlich reduziert werden und die Wassertemperatur genau reguliert werden.

Die beschriebenen Ausführungsformen haben Tunnelpasteure gezeigt, bei denen jede Temperaturzone über einen Zonenpuffer verfügt. Es ist jedoch auch möglich, dass nicht alle Zonen über einen getrennten Zonenpuffer zur Temperaturregulierung verfügen oder nicht allen Temperaturzonen Wasser aus den Zonenpuffern zugeführt werden kann.

## Patentansprüche

1. Tunnelpasteur (1), insbesondere für gefüllte Flaschen oder Dosen, mit
einem Tunnel (2), durch den das zu pasteurisierende Gut geleitet und mit Wasser bespritzt, bzw. berieselt wird,
sowie einem unten am Tunnel (2) ausgebildeten Auffangbereich (15) für das herablaufende Wasser,
wobei der Tunnelpasteur (1) mehrere in Transportrichtung angeordnete Temperaturzonen (T₁, T₂, T₃....) aufweist, und der Auffangbereich (15) in voneinander getrennte, den Temperaturzonen zugeordnete Auffangzonen (16) unterteilt ist, von denen aus das Wasser wieder nach oben in den Tunnel in der entsprechenden Temperaturzone geführt wird, und mit
einer Steuereinrichtung zur Regulierung der Wassertemperatur in den einzelnen Temperaturzonen
**dadurch gekennzeichnet, dass**
überschüssiges Wasser in einzelnen Temperaturzonen (T₁, T₂, T₃) getrennt von den anderen Temperaturzonen (T₁, T₂, T₃) in einem jeweiligen Zonenpuffer (50) gepuffert wird und
dass die Steuerung und die Verrohrung derart gestaltet sind, dass zur Temperaturregelung Wasser von bestimmten Zonenpuffem (50, 16) wahlweise entnehmbar und wahlweise gezielt bestimmten Temperaturzonen (T₁, T₂, T₃,...) zuführbar ist.

2. Tunnelpasteur (1) nach Anspruch 1, **dadurch gekennzeichnet, dass** die Volumina aller oder einzelner Auffangzonen (16) so groß sind, dass sie als getrennte Zonenpuffer (50) für das überschüssige Wasser in den entsprechenden Temperaturzonen (T₁, T₂, T₃,....) dienen und/oder die Temperaturzonen einen mit der entsprechenden Auffangzone (16) verbundenen Pufferbehälter als Zonenpuffer (50) aufweisen.

3. Tunnelpasteur (1) nach mindestens einem der Ansprüche 1 oder 2, **dadurch gekennzeichnet, dass** das Wasser aus den entsprechenden Auffangzonen (16) über eine jeweilige Zonenpumpe (20) nach oben in die entsprechende Tunnelzone gepumpt wird, wobei auch das Wasser zur Temperaturregelung über die Zonenpumpe (20) aus den entsprechenden Auffangzonen (16) gepumpt wird.

4. Tunnelpasteur (1) nach mindestens einem der Ansprüche 1 bis 3, **dadurch gekennzeichnet, dass** jedem Zonenpuffer (50)ein Füllstandmesser (13) sowie ein Temperatursensor (21) zugeordnet ist, um die Temperatur und das Volumen des gepufferten Wassers zu bestimmen.

5. Tunnelpasteur (1) nach mindestens einem der Ansprüche 1 bis 4, **dadurch gekennzeichnet, dass** der Tunnelpasteur (1) mindestens eine Kaltwasserversorgungsleitung (8) und mindestens eine Warmwasserversorgungsleitung (7) umfasst, und die einzelnen Auffangzonen bzw. Zonenpuffer (50) eine Kaltwasserzuführung (17) und/oder Warmwasserzuführung (6) aufweisen, wobei das zur Temperaturregelung aus den Zonenpuffern (50) entnommene Wasser über eine entsprechende Pufferentnahmeleitung (10a,b) entweder einer Kaltwasserversorgungsleitung (11) oder einer Warmwasserversorgungsleitung (12) zugeführt wird.

6. Tunnelpasteur (1) nach Anspruch 5, **dadurch gekennzeichnet, dass** der Tunnelpasteur (1) einen Wärmetauscher (18) umfasst, wobei das der Warmwasserversorgungsleitung (7) von dem entsprechenden Zonenpuffer (50) zugeführte Wasser zuerst über eine Rückführleitung (9) über den Wärmetauscher (18) geleitet wird.

7. Tunnelpasteur (1) nach einem der Ansprüche 3, 5 und 6, **dadurch gekennzeichnet, dass** unterhalb einer Auffangzone (16) ein Absaugkasten (26) angeordnet ist, über den die Zonenpumpe (20) Wasser aus der Auffangzone (16) pumpt, wobei der Absaugkasten (26) und die Zonenpumpe auf einer Seite des Tunnelpasteurs (1) angeordnet sind, und ein Verteilerrohr (4) auf der gegenüberliegenden Seite angeordnet ist und über ein Rohr (30) mit dem der Zonenpumpe (20) verbunden ist, wobei von dem Verteilerrohr (4) mindestens ein Rohr (27) nach oben zum entsprechenden Tunnel (2) abzweigt, und das Verteilerrohr (4) weiter über die Pufferentnahmeleitung (10a,c) mit der Warmwasserversorgungsleitung (12) bzw. einer Rückführleitung (9) zum Wärmetauscher (18) und/oder über die Pufferentnahmeleitung (10b) mit der Kaltwasserversorgungsleitung (8) verbunden ist.

8. Tunnelpasteur (1) nach mindestens einem der Ansprüche 1 bis 7, **dadurch gekennzeichnet, dass** die Zonenpuffer (50) bzw. Auffangzonen einen Ablass (23) aufweisen, über den bei zu hohem Füllstand Wasser abgelassen werden kann.

9. Tunnelpasteur (1) nach mindestens einem der Ansprüche 1 bis 8, **dadurch gekennzeichnet, dass** der Auffangbereich (15) durch Trennelemente (24) unterteilte Wannen umfasst.

10. Tunnelpasteur (1) nach Anspruch 10, **dadurch gekennzeichnet, dass** mehrere nebeneinanderliegende Wannen (16 a, b, c) über eine unterhalb der Wannen angeordnete Sammeleinrichtung miteinander verbunden sind und somit eine Auffangzone darstellen.

11. Tunnelpasteur (1) nach mindestens einem der Ansprüche 1 bis 10, **dadurch gekennzeichnet, dass** der Tunnelpasteur (1) mehrere Aufheizzonen, mehrere Haltezonen und mehrere Abkühlzonen aufweist, wobei Aufheiz- und Abkühlzonen mit gleicher Solltemperatur über entsprechende Leitungen (25 a, b) miteinander verbunden sind.

12. Pasteurisierverfahren, bei dem zu pasteurisierendes Gut durch mehrere Temperaturzonen eines Tunnels (2) geleitet und mit Wasser bespritzt bzw. berieselt wird,
herablaufendes Wasser in einem unten am Tunnel (2) angeordneten Auffangbereich (15) in verschiedene, den Temperaturzonen entsprechende Auffangzonen (16) aufgefangen wird,
das Wasser aus den Auffangzonen (16) wieder nach oben in den Tunnel in der entsprechenden Temperaturzone geleitet wird, wobei die Temperatur in den Temperaturzonen geregelt wird,
**dadurch gekennzeichnet, dass**
überschüssiges Wasser in einzelnen Temperaturzonen in von anderen Temperaturzonen getrennten jeweiligen Zonenpuffern (50) gepuffert wird und dass zur Temperaturregelung des Wassers in den Temperaturzonen (T₁, T₂, T₃) wahlweise Wasser aus einzelnen Zonenpuffem (50) entnommen wird und wahlweise gezielt bestimmten Auffangzonen (16) zugeführt wird.

13. Pasteurisierverfahren nach Anspruch 12,
**dadurch gekennzeichnet, dass**
das überschüssige Wasser in den entsprechenden Auffangzonen (16), die als Zonenpuffer dienen oder in Pufferbehältern, die mit den Auffangzonen (16) verbunden sind, gepuffert wird.

14. Pasteurisierverfahren nach Anspruch 12 oder 13, **dadurch gekennzeichnet, dass** die Temperatur des Wassers in den einzelnen Temperaturzonen und der Füllstand in den einzelnen Zonenpuffem (50) bestimmt wird und in Abhängigkeit des Füllstands und der Temperatur Wasser aus den bestimmten Zonenpuffern (50) entnommen wird und gezielt bestimmten Temperaturzonen (T₁, T₂, T₃,...) zugeführt wird.

15. Verfahren nach einem der Ansprüche 13 oder 14, **dadurch gekennzeichnet, dass** dann Wasser aus einem Zonenpuffer (50) zur Regulierung der Wassertemperatur (16) verwendet wird, wenn der Füllstand in diesem Zonenpuffer (50) einen vorbestimmten Wert übersteigt, und die Temperatur in einem bestimmten Bereich liegt.

16. Verfahren nach einem der Ansprüche 13 bis 15, **dadurch gekennzeichnet, dass** zur Temperaturregelung Wasser aus einer Auffangzone (16) über eine entsprechende Zonenpumpe (20) in eine Kaltwasserversorgungsleitung (8) oder Warmwasserversorgungsleitung (7) oder in eine Rückführleitung zum Wärmetauscher (9) gepumpt wird.

17. Verfahren nach mindestens einem der Ansprüche 13 bis 16, **dadurch gekennzeichnet, dass** bei zu hohem Füllstand in einem Zonenpuffer (50), wenn von den anderen Temperaturzonen (T₁, T₂, T₃) aus dieser Auffangzone (16) kein Wasser benötigt wird, Wasser abgelassen wird, oder in die Kaltwasserversorgungsleitung (8) oder die Warmwasserversorgungsleitung (7) oder in die Rückführleitung (9) zum Wärmetauscher abgeführt wird.

## Claims

1. Tunnel pasteuriser (1), particularly for filled bottles or tins, comprising
a tunnel (2) through which the material to be pasteurised is conducted and sprayed or sprinkled with water,
as well as a trap region (15) for the draining water formed on the bottom of the tunnel (2),
wherein the tunnel pasteuriser (1) comprises a plurality of temperature zones (T₁, T₂, T₃...) arranged in the transport direction, and the trap region (15) is divided into trap zones (16) separated from one another and associated to the temperature zones, from which the water is conducted upwards again into the tunnel in the respective temperature zone, and comprising
a control means for regulating the water temperature in the individual temperature zones,
**characterized in that**
excessive water is buffered in the individual temperature zones (T₁, T₂, T₃) separately from the other temperature zones (T₁, T₂, T₃) in a respective zone buffer (50), and
that the control and the tubing are adapted such that for temperature regulation water can selectively be taken from predetermined zone buffers (50, 16) and can selectively be supplied in an aimed manner to predetermined temperature zones (T₁, T₂, T₃ ...).

2. Tunnel pasteuriser (1) as claimed in claim 1, **characterized in that** the volumes of all or individual trap zones (16) are so large that they serve as separate zone buffers (50) for the excessive water in the respective temperature zones (T₁, T₂, T₃ ...) and/or the temperature zones comprise a buffer container as zone buffer (50) connected with the respective trap zone (16).

3. Tunnel pasteuriser (1) as claimed in at least one of claims 1 or 2, **characterized in that** the water is pumped from the respective trap zones (16) via a respective zone pump (20) upwardly into the respective tunnel zone, wherein the water is also pumped for temperature regulation via the zone pump (20) out of the respective trap zones (16).

4. Tunnel pasteuriser (1) as claimed in at least one of claims 1 to 3, **characterized in that** a filling level sensor (13) as well as a temperature sensor (21) is associated to each zone buffer (50) to determine the temperature and the volume of the buffered water.

5. Tunnel pasteuriser (1) as claimed in at least one of claims 1 to 4, **characterized in that** the tunnel pasteuriser (1) comprises at least one cold water supply line (8) and at least one hot water supply line (7), and the individual trap zones or zone buffers (50) have a cold water supply and/or a hot water supply (6), wherein the water taken for temperature regulation out of the zone buffers (50) is supplied either to a cold water supply line (11) or to a hot water supply line (12) via a respective buffer discharge line (10a. b).

6. Tunnel pasteuriser (1) as claimed in claim 5, **characterized in that** the tunnel pasteuriser (1) comprises a heat exchanger (18), wherein the water supplied to the hot water supply line (7) by the respective zone buffer (50) is first of all conducted via a return line (9) through the heat exchanger (18).

7. Tunnel pasteuriser (1) as claimed in one of claims 3, 5, and 6, **characterized in that** a suction box (26) is arranged below a trap zone (16), through which said suction box the zone pump (20) pumps water out of the trap zone (16), wherein the suction box (26) and the zone pump are arranged on one side of the tunnel pasteuriser (1) and a distributing tube (4) is arranged on the opposing side and is connected to the zone pump (20) via a tube (30), wherein at least one tube (27) branches off upwardly from the distributing tube to the respective tunnel (2), and the distributing tube (4) is further connected through the buffer discharge line (10a, c) with the hot water supply line (12) or a return line (9) to the heat exchanger (18) and/or via the buffer discharge line (10b) to the cold water supply line (8).

8. Tunnel pasteuriser (1) as claimed in at least one of claims 1 to 7, **characterized in that** the zone buffer (50) and the trap zones have a discharge (23) through which water can be discharged in case the filling level is too high.

9. Tunnel pasteuriser (1) as claimed in at least one of claims 1 to 8, **characterized in that** the trap portion (15) comprises troughs separated by separating elements (24).

10. Tunnel pasteuriser (1) as claimed in claim 9, **characterized in that** a plurality of adjoining troughs (16a, b, c) are connected to one another through a collecting means arranged below the troughs and therefore represent a trap zone.

11. Tunnel pasteuriser (1) as claimed in at least one of claims 1 to 10, **characterized in that** the tunnel pasteuriser (1) comprises a plurality of heating zones, a plurality of stop zones and a plurality of cooling zones, wherein the heating and cooling zones are connected to one another with the same target temperature via respective lines (25 a, b).

12. Pasteurising method, in which material to be pasteurised is conducted through a plurality of temperature zones of a tunnel (2) and is sprayed or sprinkled with water,
draining water is collected in a trap portion (15) arranged on the bottom of the tunnel (2) in different trap zones (16) that correspond to the temperature zones,
the water from the trap zones (16) is re-conducted upwards into the tunnel of the respective temperature zones, wherein the temperature in the temperature zones is regulated,
**characterized in that**
excessive water is buffered in the individual temperature zones in zone buffers (50) separate from other temperature zones and that for temperature regulation of the water in the temperature zones (T₁, T₂, T₃) water is selectively taken from individual zone buffers (50) and is selectively supplied to predetermined trap zones (16) in an aimed manner.

13. Pasteurising method as claimed in claim 12, **characterized in that** the excessive water is buffered in the respective trap zones (16), which serve as zone buffers or in buffer contains that are connected to the trap zones (16).

14. Pasteurising method as claimed in claim 12 or 13, **characterized in that** the temperature of the water in the individual temperature zones and the filling level in the individual zone buffers (50) is determined and water is taken from the predetermined zone buffers (50) depending on the filling level and the temperature from and said water is supplied to predetermined temperature zones (T₁, T₂, T₃,...) in an aimed manner.

15. Method as claimed in one of claims 13 or 14, **characterized in that** water from a zone buffer (50) is used for regulating the water temperature (16) if the filling level in this zone buffer (50) exceeds a predetermined value and the temperature lies in a predetermine range.

16. Method as claimed in one of claims 13 to 15, **characterized in that** for temperature control water is pumped from a trap zone (16) via a respective zone pump (20) into a cold water supply line (8) or hot water supply line (7) or into a return line to the heat exchanger (9).

17. Method as claimed in at least one of claims 13 to 16, **characterized in that** if the filling level is too high in a zone buffer (50), if water is not required by the other temperature zones (T₁, T₂, T₃) from this trap zone (16), water is discharged, or it is discharged into the cold water supply line (8) or into the hot water supply line (7) or into the return line (9) to the heat exchanger.

## Revendications

1. Pasteurisateur à tunnel (1), en particulier pour des bouteilles ou des boîtes remplies, comprenant
un tunnel (2), au travers duquel est dirigé le produit à pasteuriser et aspergé ou arrosé d'eau,
ainsi qu'une zone de collecte (15), réalisée en partie basse sur le tunnel (2), pour l'eau s'écoulant vers le bas,
le pasteurisateur à tunnel (1) comprenant plusieurs zones de température (T₁, T₂, T₃ ...) disposées dans la direction de transport, et la zone de collecte (15) étant subdivisée en zones de collecte (16) séparées les unes des autres, associées aux zones de température, à partir desquelles l'eau est de nouveau guidée vers le haut dans le tunnel dans la zone de température correspondante, et comprenant
un dispositif de commande pour régler la température d'eau dans les zones de température individuelles,
**caractérisé en ce que**
de l'eau excédentaire, dans des zones de température individuelles (T₁, T₂, T₃), est stockée séparément des autres zones de température (T₁, T₂, T₃) dans un tampon de zone (50) respectif, et
que la commande et le tubage sont configurés de telle sorte que, pour le réglage de température, de l'eau peut être prélevée sélectivement de tampons de zones (50, 16) définis et envoyée sélectivement, de façon ciblée, dans des zones de température définies (T₁, T₂, T₃ ...) .

2. Pasteurisateur à tunnel (1) suivant la revendication 1, **caractérisé en ce que** les volumes de toutes les zones de collecte ou de zones de collecte individuelles (16) sont tels qu'ils servent de tampons de zones séparés (50) pour l'eau excédentaire dans les zones de température correspondantes (T₁, T₂, T₃ ...) et/ou les zones de température présentent un réservoir tampon, relié à la zone de collecte correspondante (16), en tant que tampon de zone (50).

3. Pasteurisateur à tunnel (1) suivant l'une au moins des revendications 1 et 2, **caractérisé en ce que** l'eau est pompée vers le haut dans la zone de tunnel appropriée à partir des zones de collecte (16) correspondantes, par l'intermédiaire d'une pompe de zone (20) respective, l'eau pour le réglage de température étant également pompée des zones de collecte correspondantes (16) par l'intermédiaire de la pompe de zone (20).

4. Pasteurisateur à tunnel (1) suivant l'une au moins des revendications 1 à 3, **caractérisé en ce qu'**une jauge de niveau (13) ainsi qu'un capteur de température (21) sont associés à chaque tampon de zone (50), pour déterminer la température et le volume de l'eau stockée.

5. Pasteurisateur à tunnel (1) suivant l'une au moins des revendications 1 à 4, **caractérisé en ce que** le pasteurisateur à tunnel (1) comporte au moins une conduite d'alimentation en eau froide (8) et au moins une conduite d'alimentation en eau chaude (7), et les zones de collecte individuelles ou tampons de zone (50) présentent une arrivée d'eau froide (17) et/ou une arrivée d'eau chaude (6), l'eau prélevée des tampons de zone (50) pour le réglage de température étant envoyée, par l'intermédiaire d'une conduite de prélèvement tampon (10a, b) correspondante, soit dans une conduite d'alimentation en eau froide (11), soit dans une conduite d'alimentation en eau chaude (12).

6. Pasteurisateur à tunnel (1) suivant la revendication 5, **caractérisé en ce que** le pasteurisateur à tunnel (1) comprend un échangeur thermique (18), l'eau envoyée dans la conduite d'alimentation en eau chaude (7) à partir du tampon de zone (50) correspondant étant d'abord dirigée, par l'intermédiaire d'une conduite de retour (9), au travers de l'échangeur thermique (18).

7. Pasteurisateur à tunnel (1) suivant l'une des revendications 3, 5 et 6, **caractérisé en ce qu'**un caisson d'aspiration (26) est disposé au-dessous d'une zone de collecte (16), caisson par l'intermédiaire duquel la pompe de zone (20) pompe de l'eau de la zone de collecte (16), le caisson d'aspiration (26) et la pompe de zone étant disposés sur un côté du pasteurisateur à tunnel (1), et un tube distributeur (4) étant disposé sur le côté opposé et raccordé par l'intermédiaire d'un tube (30) à celui de la pompe de zone (20), au moins un tube (27) partant en dérivation vers le haut du tube distributeur (4) en direction du tunnel (2) correspondant, et le tube distributeur (4) étant en outre raccordé par l'intermédiaire de la conduite de prélèvement tampon (10a, c) à la conduite d'alimentation en eau chaude (12) ou à une conduite de retour (9) en direction de l'échangeur thermique (18) et/ou par l'intermédiaire de la conduite de prélèvement tampon (10b) à la conduite d'alimentation en eau froide (8).

8. Pasteurisateur à tunnel (1) suivant l'une au moins des revendications 1 à 7, **caractérisé en ce que** les tampons de zone (50) ou les zones de collecte présentent une issue (23), au travers de laquelle de l'eau peut être évacuée en présence d'un niveau trop élevé.

9. Pasteurisateur à tunnel (1) suivant l'une au moins des revendications 1 à 8, **caractérisé en ce que** la zone de collecte (15) comprend des cuves subdivisées par des éléments de séparation (24).

10. Pasteurisateur à tunnel (1) suivant la revendication 10, **caractérisé en ce que** plusieurs cuves (16a, b, c) juxtaposées sont raccordées entre elles par l'intermédiaire d'un dispositif collecteur disposé au-dessous des cuves et constituent ainsi une zone de collecte.

11. Pasteurisateur à tunnel (1) suivant l'une au moins des revendications 1 à 10, **caractérisé en ce que** le pasteurisateur à tunnel (1) comporte plusieurs zones de chauffage, plusieurs zones de maintien en température et plusieurs zones de refroidissement, des zones de chauffage et de refroidissement étant raccordées entre elles à température de consigne égale par l'intermédiaire de conduites (25a, b) correspondantes.

12. Procédé de pasteurisation, dans lequel du produit à pasteuriser est dirigé au travers de plusieurs zones de température d'un tunnel (2) et aspergé ou arrosé d'eau,
de l'eau s'écoulant vers le bas est recueillie dans une zone de collecte (15) disposée en partie basse sur le tunnel (2), dans différentes zones de collecte (16) correspondantes aux zones de température,
l'eau est de nouveau dirigée vers le haut dans le tunnel, à partir des zones de collecte (16), dans la zone thermique correspondante, la température dans les zones de température étant alors réglée,
**caractérisé en ce que**
de l'eau excédentaire dans des zones de température individuelles est stockée dans des tampons de zones (50) respectifs séparés des autres zones de température et que, pour le réglage de température de l'eau dans les zones de température (T₁, T₂, T₃), de l'eau est prélevée sélectivement de tampons de zones (50) individuels et envoyée sélectivement, de façon ciblée, dans des zones de collecte (16) définies.

13. Procédé de pasteurisation suivant la revendication 12, **caractérisé en ce que** l'eau excédentaire est stockée dans les zones de collecte (16) correspondantes, qui servent de tampons de zones, ou dans des réservoirs tampons, raccordés aux zones de collecte (16).

14. Procédé de pasteurisation suivant l'une des revendications 12 et 13, **caractérisé en ce que** la température de l'eau dans les zones de température individuelles et le niveau dans les tampons de zones individuels (50) sont déterminés et, en fonction du niveau et de la température, de l'eau est prélevée des tampons de zones définis (50) et envoyée de façon ciblée dans des zones de température définies (T₁, T₂, T₃ ...) .

15. Procédé suivant l'une des revendications 13 et 14, **caractérisé en ce que** de l'eau d'un tampon de zone (50) est utilisée pour le réglage de la température d'eau (16), lorsque le niveau dans ce tampon de zone (50) dépasse par le haut une valeur prédéfinie et la température se situe dans une plage définie.

16. Procédé suivant l'une des revendications 13 à 15, **caractérisé en ce que**, pour le réglage de température, de l'eau est pompée d'une zone de collecte (16), par l'intermédiaire d'une pompe de zone correspondante (20), dans une conduite d'alimentation en eau froide (8) ou dans une conduite d'alimentation en eau chaude (7) ou dans une conduite de retour en direction de l'échangeur thermique (9) .

17. Procédé suivant l'une au moins des revendications 13 à 16, **caractérisé en ce que**, en présence d'un niveau trop élevé dans un tampon de zone (50), de l'eau est évacuée lorsqu'aucune quantité d'eau n'est requise par les autres zones de température (T₁, T₂, T₃) à partir de cette zone de collecte (16), ou est renvoyée dans la conduite d'alimentation en eau froide (8) ou la conduite d'alimentation en eau chaude (7) ou dans la conduite de retour (9) en direction de l'échangeur thermique.
